# EUROPÄISCHE PATENTSCHRIFT

(11) **EP 1 532 909 B1**
(45) Veröffentlichungstag und Bekanntmachung des Hinweises auf die Patenterteilung: **21.05.2008**
(21) Anmeldenummer: 03405833.9
(22) Anmeldetag: 20.11.2003
(51) Int. Cl.: A47J 43/08, A47J 31/40, B65D 1/32, B65D 79/00

(54) **Vorrichtung zur Erzeugung von Milch- oder Milchschaum- getränken**
Device for producing milk or frothed milk
Dispositif pour produire du lait ou du lait moussé

(43) Veröffentlichungstag der Anmeldung: 25.05.2005
(73) Patentinhaber: Steiner AG Weggis, 6353 Weggis (CH)
(72) Erfinder: In-Albon, Jean-Paul, 1957 Ardon (CH)
(74) Vertreter: Luchs, Willi

(56) Entgegenhaltungen:
- EP-A- 0 600 826
- EP-A- 1 362 799
- WO-A-03/082065

## Beschreibung

Die Erfindung betrifft eine Vorrichtung zur Erzeugung von Milch- oder Milchschaumgetränken gemäss dem Oberbegriff des Anspruches 1 sowie eine Kapsel für eine solche Vorrichtung

Eine Vorrichtung dieser Art, die insbesondere zur Erzeugung von Milchschaum für Cappucino-Kaffee vorgesehen ist, ist beispielsweise aus der EP-A-600 826 bekannt. Die Milch wird in einem von einem Heizgefäss umschlossenen Behälter erhitzt und mittels einer Pumpe durch ein Widerstandsdurchlasselement geprcsst, in welchem unter Zuführung von einem Luftgemisch der Milchschaum erzeugt wird. Bei dieser Vorrichtung müssen alle Leitungen und Wege für die Milch, vom Behälter bis zum Auslass, regelmässig gereinigt werden, was jeweils mit einem aufwendigen Reinigungsprozedre und von Zeit zu Zeit eine relativ komplizierte Demontage der Vorrichtung unumgänglich macht.

Die Druckschrift WO-A-03 082065 ist bezogen auf die Erzeugung von Getränken durch Extraktion unter Verwendung von Kapseln, was insbesondere bei Kaffeemaschinen allgemein bekannt ist, wobei lediglich erwähnt ist, dass auch Milchgetränke erzeugt werden können. Es sind aber keine Mittel zum Beimischen von Luft zu der erhitzten Milch vorhanden, so dass eine Milchschaumerzeugung jedoch nicht möglich ist. Durch die Austrittsöffnungen tritt der flüssige Extrakt aus der Kapsel heraus, wenn heisser Wasserdampf unter dem Druck in die Kapsel eingeleitet wird. Es kann aber - aufgrund der kleinen Öffnungen im Boden der Kapsel - der Milch schlichtwegs nicht Luft aus der Umgebung beigemischt und dadurch Milchschaum erzeugt werden.

Der vorliegenden Erfindung liegt die Aufgabe zugrunde, eine Vorrichtung der eingangs genannten Art zu schaffen, die einen wesentlich vereinfachten Unterhalt ermöglicht.

Diese Aufgabe wird erfindungsgemäss durch eine Vorrichtung mit den Merkmalen des Anspruches 1 und durch eine Kapsel mit den Merkmalen des Anspruches 10 gelöst.

Weitere bevorzugte Ausgestaltungen der erfindungsgemässcn Vorrichtung bilden den Gegenstand der abhängigen Ansprüche.

Die erfindungsgemässe Vorrichtung ist einfach und kostengünstig und erleichtert wesentlich den Unterhalt. Zu reinigen ist nur der Auslass und allenfalls eine dem Auslass zugeordnete Widerstandsdurchlass-Scheibe, die äusserst leicht zugänglich sind. Zudem kann in einer sehr einfachen Weise ein gewünschtes Milch- oder Milchschaumgetränk gewählt und herausgelassen werden.

Die Erfindung wird nachfolgend anhand der Zeichnung näher erläutert. Es zeigen rein schematisch:

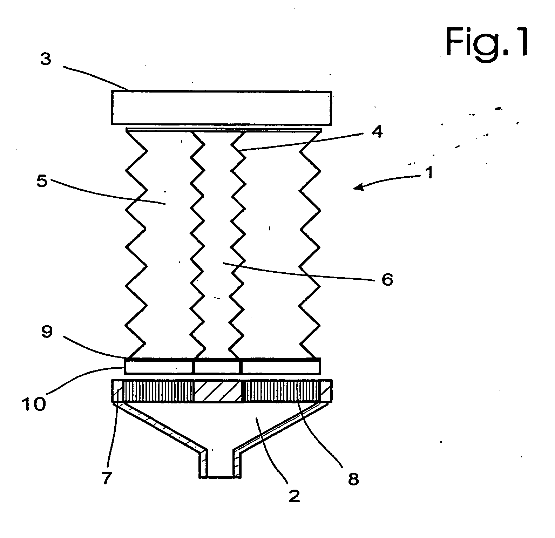

- Fig. 1 bis 3: drei Ausführungsbeispiele einer erfindungsgemässen Vorrichtung.

Fig.1 zeigt einen Teil einer erfindungsgemässen Vorrichtung zur Erzeugung von Milch- oder Milchschaumgetränken, die insbesondere für eine Kaffeemaschine vorgesehen ist. Oberhalb eines Auslasses 2 ist eine Kapsel 1 platziert, die als ein stirnseitig geschlossener und mittels eines oberen, vertikal verstellbaren Pressteiles 3 in Richtung zum Auslass 2 hin zusammendrückbarer Balg in der Art einer Ziehharmonika ausgebildet ist. In der balgförmigen Kapsel 1 wird durch einen weiteren, ebenfalls balgförmigen Teil 4 ein Ringraum gebildet, der Milch enthält. Diese ringförmige Milchkammer 5 umschliesst eine mit Luft gefüllte innere Luftkammer 6. Anstelle von Milch kann es sich auch um aromatisierte Milch handeln, z.B. mit Vanill-, Schokolade- oder anderem Geschmack.

Dem Auslass 2 ist eine drehverstellbare Widerstandsdurchlass-Scheibe 7 zugeordnet, die mit einer Anzahl von im Kreis vorzugsweise gleichmässig verteilten, unterhalb der Milchkammer 5 angeordneten Widerstandsdurchlasselementen 7 versehen ist. Oberhalb der Scheibe 7 ist ein mit dem Boden 9 der Kapsel 1 zusammenwirkendes Gegenstück 10 angeordnet, das gleich wie die Scheibe 7 mit den Widerstandsdurchlasselementen 8 sowie auch der Auslass 2 zum Beispiel einen Bestandteil der Kaffeemaschine bilden. Das Gegenstück 10, gegen das die Kapsel 1 mit ihrem Boden 9 mittels des Pressteiles 3 andrückbar ist, ist z.B. mit Vorsprüngen 11 ausgestattet, die den Boden 9 der Kapsel 1 sowohl im Bereich der Milchkammer 5 als auch im Bereich der Luftkammer 6 beim Zusammendrücken der Kapsel 1 durchstossen können. Je nach Stellung der Scheibe 7 kann aus der Kapsel 1 entweder nur Milch direkt, kalt oder über nicht näher dargestellte jedoch weiter unten näher erwähnte Heizmittel erheitzt, - ohne die Widerstandsdurchlasselemente 8 passiert zu haben - herausgelassen werden, oder die erhitzte Milch kann durch die Widerstandsdurchlasselemente 8 hindurch zusammen mit der aus der Luftkammer 6 gepressten Luft gedrängt und dabei aufgeschäumt werden.

Die Mittel zum Erhitzen der Milch können in der Kapsel 1 integriert und beispielsweise durch einen Heizfaden (Widerstandsheizung) realisiert werden. Andere Möglichkeit besteht darin, die Heizmittel an der für die Aufnahme der Kapsel 1 vorgesehenen Stelle der Vorrichtung bzw. der Kaffeemaschine anzubringen und auf die Oberfläche der Kapsel einwirken zu lassen, wobei die Kapsel 1 dementsprechend aus einem wärmeleitenden Material angefertigt sein muss. Die Erhitzung könnte auch kontaktlos, z.B. über Mikrowellen oder Ähnliches erfolgen.

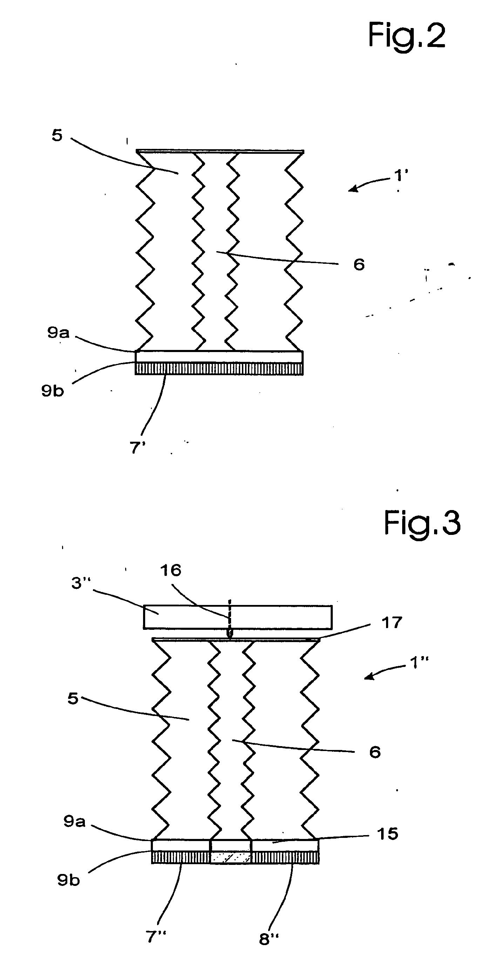

Bei den in Fig. 2 und 3 dargestellten Ausführungen bildet die Widerstandsdurchlass-Scheibe 7' bzw. 7" einen Bestandteil der Kapsel 1' bzw. 1" und ist unterhalb eines doppelten, eine Bodenkammer 15 bildenden Bodens 9a, 9b angeordnet (Fig. 2 zeigt eine einteilige Widerstandsdurchlass-Scheibe 7', die Scheibe 7" nach Fig. 3 enthält wiederum mehrere Widerstandsdurchlasselemente 8"). Beim Aufdrücken der Kapsel 1' bzw. 1" mit der Widerstandsdurchlass-Scheibe 7' bzw. 7" auf den Auslassteil und Durchstossen des Bodens 9a wird die aus der Milchkammer 5 ausgepresste Milch mit der aus der Luftkammer 6 ausgepressten Luft in der Bodenkammer 15 und vermischt und durch die Widerstandsdurchlass-Scheibe 7' bzw. 7" gedrängt und dabei aufgeschäumt. Wie in Fig. 3 angedeutet, kann mit dem eine Krafteinwirkung auf die Kapsel 1" ausübenden Pressteil 3" auch von oben eine Luftdüse 16 durch den oberen, stirnseitigen Teil 17 der Kapsel 1" in die Luftkammer 6 eingepresst und zusätzliche Luft eingeführt werden.

Bei den Kapseln 1, 1', 1" handelt es sich um Wegwerfkapseln, die darum vorzugsweise aus einem rezyklierbaren Material bestehen. Mit Vorteil werden mehrere Kapseln in einem verstellbaren, z.B. drehverstellbaren Magazin angeordnet und durch das Verstellen des Magazins jeweils in die Gebrauchsstellung oberhalb des Auslasses 2 gebracht. Dabei kann es sich um bezüglich des Inhalts (aromatisierte oder normale Milch) und Volumens verschiedene Kapseln handeln. Bei den Varianten nach Fig. 2 und 3 können z.B. auch Kapseln zum Herauslassen nur der Milch (kalt oder erhitzt) vorgesehen sein, bei denen die Widerstandsdurchlass-Scheibe 7' bzw. 7" entfallen kann.

Die erfindungsgemässe Vorrichtung ist einfach und kostengünstig und erleichtert wesentlich den Unterhalt. Zu reinigen ist nur der Auslass und bei der Variante nach Fig. 1 das dem Auslass 2 zugeordnete Gegenstück 10 sowie die Widerstandsdurchlass-Scheibe 7, die äusserst leicht zugänglich sind. Zudem kann in einer sehr einfachen Weise ein gewünschtes Milch- oder Milchschaumgetränk gewählt und herausgelassen werden.

## Patentansprüche

1. Vorrichtung zur Erzeugung von Milch- oder Milchschaumgetränken, insbesondere für eine Kaffeemaschine, mit Mitteln zum Erhitzen der Milch oder dergleichen sowie mit Mitteln zum Beimischen von Luft zu der erhitzten und zu einem Auslass (2) geführtes Milch, **dadurch gekennzeichnet, dass**
oberhalb des Auslasses (2) eine für einen Einmalgebrauch vorgesehene Kapsel (1, 1', 1") plazierbar und erhitzbar ist, die eine Milchkammer (5) für eine vorgegebene Menge Milch sowie eine von dieser getrennte, mit Luft gefüllte Luftkammer (6) aufweist, und die als ein stirnseitig geschlossener, unter der Krafteinwirkung in Richtung zum Auslass (2) hin zusammendrückbarer und an ein Gegenstück (10, 2) andrückbare Balg ausgebildet ist, wobei den beiden Kammern (5, 6) zugeordnete Bodenteile der Kapsel unter einer Krafteinwirkung durchstossbar sind, zum Herauslassen der Milch und zur allfälligen Milchschaumerzeugung durch Zuführung der Luft aus Luftkammer (6) zu der aus der Milchkammer (5) heraustretenden Milch.

2. Vorrichtung nach Anspruch 1, **dadurch gekennzeichnet, dass** dem Auslass (2) oder dem Boden (9a, 9b) der Kapsel (1', 1") eine Widerstandsdurchlass-Scheibe (7, 7', 7") zugeordnet ist, durch welche die aus der Kapsel (1, 1', 1") heraustretende Milch förderbar ist.

3. Vorrichtung nach Anspruch 1 oder 2, **dadurch gekennzeichnet, dass** die Milchkammer (5) durch einen in der balgförmigen Kapsel (1, 1', 1") vorgesehenen und die Luftkammer (6) umschliessenden Ringraum gebildet ist.

4. Vorrichtung nach einem der Ansprüche 1 bis 3, **dadurch gekennzeichnet, dass** in die Luftkammer (6) beim Zusammendrücken der balgförmigen Kapsel (1, 1', 1") von oben, durch einen oberen, stirnseitigen Teil (17) der Kapsel eine Luftdüse (16) für eine zusätzliche Luftzufuhr einstossbar ist.

5. Vorrichtung nach einem der Ansprüche 2 bis 4, **dadurch gekennzeichnet, dass** oberhalb einer dem Auslass (2) zugeordneten Widerstandsdurchlass-Scheibe (7) ein mit dem Boden (9) der Kapsel (1) zusammenwirkendes, mit Vorsprüngen zum Durchstossen des Bodens (9) versehenes Gegenstück (10) angeordnet ist, an welches die Kapsel (1) andrückbar ist, wobei die Widerstandsdurchlass-Scheibe (7) mit einer Anzahl von im Kreis verteilten Widerstandsdurchlasselementen (8) versehen und drehverstellbar angeordnet ist.

6. Vorrichtung nach einem der Ansprüche 1 bis 5, **dadurch gekennzeichnet, dass** die Mittel zum Erhitzen der Milch, vorzugsweise in Form eines Heizfadens, in der Kapsel (1, 1', 1") integriert sind.

7. Vorrichtung nach einem der Ansprüche 1 bis 5, **dadurch gekennzeichnet, dass** die Mittel zum Erhitzen der Milch der für die Aufnahme der Kapsel (1, 1', 1") vorgesehenen Stelle der Vorrichtung bzw. Kaffeemaschine zugeordnet und mit der Kapseloberfläche wirkverbunden sind.

8. Vorrichtung nach einem der Ansprüche 1 bis 7, **dadurch gekennzeichnet, dass** eine Anzahl von Kapseln (1, 1', 1") in einem verstellbaren Magazin angeordnet und mittels des Magazins jeweils oberhalb des Auslasses (2) platzierbar sind.

9. Vorrichtung nach Anspruch 8, **dadurch gekennzeichnet, dass** wahlweise nur mit Milch oder auch mit Luft gefüllte Kapseln (1', 1"), mit oder ohne Widerstandsdurchlass-Scheiben (7', 7") ausgestattet, einsetzbar sind, wobei auch Kapseln unterschiedlichen Volumens und unterschiedlichen Inhalts (Milch oder Milch verschiedentlich aromatisiert) wählbar sind.

10. Kapsel für eine Vorrichtung nach einem der Ansprüche 1. bis 9, **dadurch gekennzeichnet, dass** sie als ein stirnseitig geschlossener, unter der Krafteinwirkung zusammendrückbarer und an ein Gegenstück (10) andrückbarer Balg ausgebildet ist und eine Milchkammer (5) für eine vorgegebene Menge Milch sowie eine von dieser getrennte, mit Luft gefüllte Luftkammer (6) aufweist, wobei den beiden Kammern (5, 6) zugeordnete Bodenteils der Kapsel unter Zusammenwirkung mit dem Gegenstück (10) durchstossbar sind.

## Claims

1. Device for producing milk drinks or foamed milk drinks, especially for a coffee machine, with means for heating of the milk or suchlike, as well as means for the mixing of air with the heated milk and an outlet (2) for the milk, **characterised in that**
a capsule (1, 1', 1") envisaged for disposable use is placeable and heatable above an outlet (2), which has a milk chamber (5) for a pre-determined quantity of milk as well as an air chamber (6) filled with air and separate from the same, and which takes the form of a bellows closed at the front and compressible under the influence of a force applied in the direction of the outlet (2) against the counter piece (10, 2), whereby floor parts of the capsule associated with the two chambers (5, 6) can be perforated under influence of an applied force, for the dispensing of the milk and for the possible creation of milk foam air can be added to the milk exiting from the air chamber (6).

2. Device according to claim 1, **characterised in that** the outlet (2) or the floor (9a, 9b) of the capsule (1', 1") is equipped with a resistance processing disc (7, 7', 7"), through which the milk exiting from the capsule (1, 1', 1") can be conveyed.

3. Device according to claim 1 or 2, **characterised in that** the milk chamber (5) is formed by an annular chamber enclosing the bellows-shaped capsule (1, 1', 1") as well as the air chamber (6).

4. Device according to one of the claims 1 to 3, **characterised in that** an air nozzle (16) for an additional air supply can be inserted from above through an upper front part (17) of the capsule into the air chamber (6) during compressing of the bellows-shaped capsule (1, 1', 1").

5. Device according to one of the claims 2 to 4, **characterised in that** a counter piece (10) equipped with projections for the perforating of the floor (9) and co-operating with the floor (9) of the capsule (1) is positioned above a resistance processing disc (7) associated with the outlet (2), against which the capsule (1) can be pressed, whereby the resistance processing disc (7) is rotation adjustable and equipped with a number of resistance processing elements (8) arranged in a circle.

6. Device according to one of the claims 1 to 5, **characterised in that** the means for the heating of the milk is integrated into the capsule (1, 1', 1") preferably in the form of a heated wire.

7. Device according to one of the claims 1 to 5, **characterised in that** the means for the heating of the milk is associated with the location of the device respectively the coffee machine envisaged for receiving the capsule (1, 1', 1") and functionally connected with the capsule surface.

8. Device according to one of the claims 1 to 7, **characterised in that** a number of capsules (1, 1', 1") are located within an adjustable magazine and can each be positioned above the outlet (2).

9. Device according to claim 8, **characterised in that** capsules (1', 1") optionally filled with only milk or also with air and with or without resistance processing discs (7' 7") can be used, whereby also capsules with different volumes and different contents (milk or variously aromatised milk) can also be used.

10. Capsule for a device according to one of the claims 1 to 9, **characterised in that** the capsule takes the form of a bellows closed at the front and compressible under the influence of a force applied against the counter piece (10) and has a milk chamber (5) for a pre-determined quantity of milk as well as an air chamber (6) filled with air and separate from the same, whereby floor parts of the capsule associated with the two chambers (5, 6) can be perforated under co-operation with the counter piece (10).

## Revendications

1. Dispositif pour produire du lait ou des boissons de lait moussé, notamment pour une machine à café, comprenant des moyens pour chauffer le lait ou analogue ainsi que des moyens pour ajouter de l'air au lait chauffé et guidé vers une sortie (2), **caractérisé en ce que**
l'on peut placer et chauffer au-dessus de la sortie (2) une capsule (1, 1', 1") prévue pour un usage unique, ayant un compartiment à lait (5) pour une quantité de lait prédéfinie ainsi qu'un compartiment à air (6) rempli d'air, séparé du compartiment à lait, la capsule étant conçue sous la forme d'un soufflet fermé du côté frontal, pouvant être comprimé sous l'effet d'une force exercée dans la direction de la sortie (2) et pouvant être pressé contre un partie antagoniste (10, 2), les parties de fond de la capsule, associées aux compartiments (5, 6), pouvant être perforées par une application de forces pour faire sortir le lait et pour produire éventuellement du lait moussé par l'apport de l'air provenant du compartiment à air (6) au lait sortant du compartiment à lait (5).

2. Dispositif selon la revendication 1, **caractérisé en ce qu'**il est associé à la sortie (2) ou au fond (9a, 9b) de la capsule (1', 1") un disque (7, 7', 7") de résistance au passage, au moyen duquel le lait sortant de la capsule (1, 1', 1") peut être refoulé.

3. Dispositif selon la revendication 1 ou 2, **caractérisé en ce que** le compartiment à lait (5) est formé par un espace annulaire prévu dans la capsule (1, 1', 1") en forme de soufflet et entourant le compartiment à air (6).

4. Dispositif selon l'une des revendications 1 à 3, **caractérisé en ce que**, lors de la compression de la capsule (1, 1', 1") en forme de soufflet, une buse à air (16) peut être enfoncée par le haut dans le compartiment à air (6), à travers une partie (17) frontale supérieure de la capsule, pour un apport d'air supplémentaire.

5. Dispositif selon l'une des revendications 2 à 4, **caractérisé en ce qu'**au-dessus du disque (7) de résistance au passage, associé à la sortie (2), est disposée une pièce antagoniste (10) coopérant avec le fond (9) de la capsule et munie de saillies destinées à perforer le fond (9), pièce antagoniste contre laquelle peut être pressée la capsule (1), le disque (7) de résistance au passage étant muni d'un certain nombre d'éléments (8) de résistance au passage, répartis en cercle et montés mobiles en rotation.

6. Dispositif selon l'une des revendications 1 à 5, **caractérisé en ce que** les moyens pour chauffer le lait sont intégrés dans la capsule (1, 1', 1"), de préférence sous la forme d'un filament de chauffage.

7. Dispositif selon l'une des revendications 1 à 5, **caractérisé en ce que** les moyens pour chauffer le lait sont associés à la zone du dispositif ou de la machine à café, prévue pour le logement de la capsule (1, 1', 1"), et sont reliés de façon coopérante à la surface de la capsule.

8. Dispositif selon l'une des revendications 1 à 7, **caractérisé en ce qu'**un certain nombre de capsules (1, 1', 1") sont disposées dans un magasin mobile et peuvent toutes être placées, au moyen du magasin, au-dessus de la sortie (2).

9. Dispositif selon la revendication 8, **caractérisé en ce que** l'on peut utiliser au choix des capsules (1', 1") remplies seulement de lait ou également d'air, munies ou non de disques (7', 7") de résistance au passage, des capsules de volumes différents et de contenus différents (lait ou lait diversement aromatisé) pouvant également faire l'objet d'un choix.

10. Capsule pour un dispositif selon l'une des revendications 1 à 9, **caractérisée en ce qu'**elle est conçue sous la forme d'un soufflet fermé du côté frontal, pouvant être comprimé sous l'effet d'une application de forces et pouvant être pressé contre une pièce antagoniste (10), et a un compartiment à lait (5) pour une quantité prédéfinie de lait ainsi qu'un compartiment à air (6) rempli d'air et séparé du compartiment à lait, des parties de fond de la capsule, associées aux deux compartiments (5, 6), pouvant être perforées sous l'effet d'une coopération avec la pièce antagoniste (10).
